(19) Europäisches Patentamt
European Patent Office
Office européen des brevets

(11) **EP 4 668 346 A1**

(12) **EUROPEAN PATENT APPLICATION**
published in accordance with Art. 153(4) EPC

(43) Date of publication:
**24.12.2025 Bulletin 2025/52**

(21) Application number: **24873059.0**

(22) Date of filing: **27.09.2024**

(51) International Patent Classification (IPC):
**H01M 4/04** (2006.01)    **H01M 4/62** (2006.01)

(52) Cooperative Patent Classification (CPC):
**H01M 4/04; H01M 4/62;** Y02E 60/10

(86) International application number:
**PCT/KR2024/014772**

(87) International publication number:
**WO 2025/071352 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.09.2023 KR 20230130792**

(71) Applicant: **LG Energy Solution, Ltd.
Seoul 07335 (KR)**

(72) Inventors:
• **JUNG, Jong-Hyun**
**Daejeon 34122 (KR)**
• **SHIN, Dong-Oh**
**Daejeon 34122 (KR)**
• **LEE, Nam-Jeong**
**Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **ELECTRODE FOR AN ELECTROCHEMICAL DEVICE AND PREPARATION METHOD THEREOF**

(57) An aspect of the present disclosure is directed to providing an electrode that reduces in interfacial resistance and maintains a predetermined level of adhesion strength, a method for manufacturing the same, and an electrochemical device including the same. The electrode according to an aspect of the present disclosure is characterized in that it is manufactured by forming an adhesive layer on an electrode film and attaching the adhesive layer to a current collector, thereby improving the adhesion strength between the current collector and the electrode film and reducing the interfacial resistance between the current collector and the electrode.

FIG. 1

EP 4 668 346 A1

**Description**

TECHNICAL FIELD

The present disclosure relates to an electrode for an electrochemical device, a method for manufacturing the same and an electrochemical device including the same. More particularly, the present disclosure relates to a dry electrode and a method for manufacturing the same.

The present application claims priority to Korean Patent Application No. 10-2023-0130792 filed on September 27, 2023 in the Republic of Korea, the disclosure of which is incorporated herein by reference.

BACKGROUND

Due to the increasing use of fossil fuels, there is a growing demand for the use of alternative energy and clean energy, and in such circumstances, many studies are being made in the field of energy generation and storage using electrochemistry. Currently, a typical example of electrochemical devices using electrical and chemical energy is secondary batteries, and the range of application of secondary batteries is gradually expanding.

One of typical secondary batteries, lithium secondary batteries, are used as not only an energy source of mobile devices but also a power source of electric vehicles and hybrid electric vehicles as an alternative to vehicles using fossil fuels such as gasoline vehicles and diesel vehicles that are regarded as one of the main causes of air pollution, and the range of application of lithium secondary batteries is expanding to an auxiliary power source through a grid.

A process of manufacturing a lithium secondary battery is largely classified into three steps; an electrode process, an assembly process and a formation/ageing process. The electrode process is sub-classified into an active material mixing process, an electrode coating process, a drying process, a rolling process, a slitting process and a winding process.

Among them, the active material mixing process is a process of mixing coating materials for forming an electrode active layer in which electrochemical reaction actually occurs in the electrode, and specifically, mixing an electrode active material which is the essential element of the electrode with an additive such as a conductive material, fillers, a binder for holding together powder and adhering to the current collector, and a solvent for imparting viscosity and dispersing the powder to prepare a flowable slurry. The mixed composition for the formation of the electrode active layer is referred to as an electrode mixture in broad sense.

Subsequently, the electrode coating process of applying the electrode mixture to the electrically conductive current collector, and the drying process for removing the solvent contained in the electrode mixture are performed, and additionally the electrode is rolled to a predetermined thickness.

Meanwhile, as the solvent included in the electrode mixture evaporates in the drying process, defects such as pin holes or cracks may occur in the already formed electrode active layer. Additionally, the active layer is not uniformly dried all over the entire inner/outer area, and due to a difference in solvent evaporation rate, some regions get dry earlier and the powder at the corresponding regions floats, and some other regions get dry later at a time interval, resulting in low quality of the electrode.

As opposed to electrodes manufactured using solvents (referred to as wet electrodes), recently, many studies are being made to manufacture dry electrodes without solvents (referred to as dry electrodes).

In this instance, the wet electrodes do not need the adhesive layer because adhesion strength is formed between the current collector and the electrode active layer in the electrode coating process on the current collector, while the dry electrodes need the adhesive layer (a primer layer) to provide adhesion strength because the electrode in a solid state is laminated onto the current collector.

Currently, many studies are being made to form a primer layer by a gravure coating method or a coating method using a slot die, but there are reports about a decrease in electrical performance of batteries and a decline in life over charge/discharge cycles due to interfacial resistance caused by the primer layer.

Therefore, for commercialization of dry electrodes, there is an urgent need for development of a new method for forming the primer layer to solve the intrinsic problems of dry electrodes and electrodes using the same.

DISCLOSURE

Technical Problem

The present disclosure is directed to:
providing an electrode having lower interfacial resistance between an electrode active material layer and a current collector and a new manufacturing method for manufacturing the same.

The present disclosure is further directed to providing an electrode having not only lower interfacial resistance between the electrode active material layer and the current collector but also a predetermined level of electrode adhesion strength and a method for manufacturing the same.

The present disclosure is further directed to providing an electrochemical device including the electrode having superior performance in terms of interfacial resistance and electrode adhesion strength.

Technical Solution

To solve the above-described problem,

according to an aspect of the present disclosure, there is provided a preliminary electrode of the following embodiments.

the preliminary electrode according to a first embodiment of the present disclosure includes:

a free-standing electrode film including an electrode active material and a fibrillated electrode binder, wherein the electrode active material is held together by the fibrillated electrode binder; and an adhesive layer present on at least part of at least one surface of the electrode film, the adhesive layer including an adhesive binder,

wherein the adhesive layer includes an adhesive layer region where the adhesive binder is clustered and an adhesive layer-absent region where one surface of the electrode film is exposed to an outside.

According to a second embodiment, in the first embodiment,

an open ratio of the adhesive layer according to the following Equation 1 may be 25% or less:

$$[\text{Equation 1}]$$

$$\text{Open ratio (\%)} = A_O / A_C \times 100$$

wherein in the Equation 1,

$A_O$ denotes an area of the adhesive layer-absent region, and
$A_C$ denotes an area of the adhesive layer region.

According to a third embodiment, in the first or second embodiment,
the open ratio may be in a range between 5% and 25%.

According to a fourth embodiment, in any one of the first to third embodiments,
the open ratio may be in a range between 10% and 15%.

According to a fifth embodiment, in any one of the first to fourth embodiments,
the surface of the electrode film may include at least one pore recessed in an inward direction of the electrode film, and the adhesive binder may be included in the at least one pore.

According to another aspect of the present disclosure, there is provided an electrode of the following embodiments.

The electrode according to a sixth embodiment includes:

a current collector, a free-standing electrode film present on at least one surface of the current collector, the free-standing electrode film including an electrode active material and a fibrillated electrode binder, wherein the electrode active material is held together by the fibrillated electrode binder, and an adhesive layer including an adhesive binder between the current collector and the electrode film,

wherein an interfacial resistance between the current collector and the electrode film is 0.1 $\Omega \cdot cm^2$ or less.

According to a seventh embodiment, in the sixth embodiment,
an adhesion strength between the current collector and the electrode film may be 15 $gf/cm^2$ or more.

According to an eighth embodiment, in the sixth or seventh embodiment,
the adhesive layer may include an adhesive layer region where the adhesive binder is clustered and an adhesive layer-absent region where one surface of the electrode film is exposed to an outside.

According to a ninth embodiment, in any one of the sixth to eighth embodiments,
an open ratio of the adhesive layer according to the following Equation 1 may be 25% or less:

[Equation 1]

$$\text{Open ratio (\%)} = A_O / A_C \times 100$$

wherein in the Equation 1,

$A_O$ denotes an area of the adhesive layer-absent region, and
$A_C$ denotes an area of the adhesive layer region.

According to still another aspect of the present disclosure, there is provided a method for manufacturing an electrode of the following embodiments.
The method for manufacturing the electrode according to a tenth embodiment includes the step of:

forming an adhesive layer on at least part of at least one surface of a free-standing electrode film including an electrode active material and a fibrillated electrode binder, wherein the electrode active material is held together by the fibrillated electrode binder,
wherein the adhesive layer includes an adhesive layer region where the adhesive binder is clustered and an adhesive layer-absent region where one surface of the electrode film is exposed to an outside.

According to an eleventh embodiment, in the tenth embodiment,
the adhesive layer may be formed with an open ratio of 25% or less, the open ratio defined by the following Equation 1:

[Equation 1]

$$\text{Open ratio (\%)} = A_O / A_C \times 100$$

wherein in the Equation 1,

$A_O$ denotes an area of the adhesive layer-absent region, and
$A_C$ denotes an area of the adhesive layer region.

According to a twelfth embodiment, in the tenth or eleventh embodiment,
the method for manufacturing the electrode may further include the step of attaching a current collector to one surface of the electrode film having the adhesive layer such that the current collector contacts the adhesive layer.
According to a thirteenth embodiment, in any one of the tenth to twelfth embodiments,
the step of forming the adhesive layer may be performed by a non-contact coating process.
According to a fourteenth embodiment, in any one of the tenth to thirteenth embodiments,
the adhesive layer may be formed using a composition for forming the adhesive layer including the adhesive binder, and a viscosity of the composition for forming the adhesive layer may be 500 cP or less at 25°C.
According to yet another aspect of the present disclosure, there is provided an electrochemical device of the following embodiments.
The electrochemical device according to a fifteenth embodiment includes:
a positive electrode; a negative electrode; and a separation layer interposed between the positive electrode and the negative electrode; wherein at least one of the positive electrode and the negative electrode is the electrode according to any one of the sixth to ninth embodiments.

Advantageous Effects

According to an embodiment of the present disclosure,
it may be possible to efficiently improve the adhesion strength between the current collector and the electrode by reducing the positional deviation of the adhesive layer and the electrode active material layer.
In addition, it may be possible to provide the electrode that exhibits low interfacial resistance between the electrode active material layer and the current collector and has the predetermined level or higher of electrode adhesion strength and a method for manufacturing the same may be provided.
Furthermore, it may be possible to provide the electrode having improved electrical performance as a dry electrode that does not use a solvent to form the electrode active material layer and the electrochemical device including the same.

BRIEF DESCRIPTION OF THE DRAWINGS

FIG. 1 is a photographic image of an upper surface of an electrode film having an adhesive layer in a preliminary electrode of Example 1 in the specification, showing regions with the adhesive layer (light shading) and without the adhesive layer (dark shading).

FIG. 2 is a photographic image of an upper surface of an electrode film having an adhesive layer in a preliminary electrode of Comparative Example 1 in the specification, showing regions with the adhesive layer and without the adhesive layer.

FIG. 3 is a photographic image of an upper surface of an electrode film having an adhesive layer in a preliminary electrode of Comparative Example 2 in the specification, showing regions with the adhesive layer and without the adhesive layer.

BEST MODE

Hereinafter, the present disclosure will be described in detail.

According to an aspect of the present disclosure, there is provided a preliminary electrode having an adhesive layer on at least one surface of a free-standing electrode film.

The term 'free-standing' as used herein refers to standing alone, not supported by anything else and relying solely on itself for moving or handling.

In the specification, the "free-standing electrode film" refers to an electrode film including a binder matrix structure that maintains its shape without a support. In general, and depending on the method used, the free-standing electrode film has sufficient mechanical strength to be used in an electrochemical device manufacturing process without using a current collector or any support. For example, the free-standing electrode film may have sufficient mechanical strength for rolling, lamination or unrolling in the electrode manufacturing process without any support. The configuration and manufacturing method of the free-standing electrode film applied to the present disclosure will be described in more detail below.

A method for manufacturing an electrode by a wet process using a slurry for forming an electrode active material layer includes applying the slurry for forming the electrode active material layer to the support such as the current collector and drying to form the electrode active material layer. Therefore, the support such as the current collector is essentially used as a component of the electrode. However, the free-standing electrode film may be provided by forming the film-shaped electrode active material layer (referred to as 'electrode film') including an electrode active material and an electrode binder to hold together the electrode active material without a support by holding the electrode active material layer through fibrillation of the electrode binder.

In the specification, the "preliminary electrode" may be the free-standing electrode film itself that may be used as an electrode in an electrochemical device. On the other hand, to use the free-standing electrode film itself as the electrode in the electrochemical device, the current collector may be present on at least one surface of the electrode film as a conductor for supplying current to the electrode film. In this instance, when the electrode film and the current collector are attached, this may be referred to as 'electrode', and the electrode film surface-treated, for example, by forming the adhesive layer on at least one surface of the electrode film before it is attached to the current collector, may be referred to as 'preliminary electrode'.

The preliminary electrode according to an aspect of the present disclosure includes the free-standing electrode film including the electrode active material and the fibrillated electrode binder, with the electrode active material being held together by the fibrillated electrode binder; and the adhesive layer on at least part of at least one surface of the electrode film, the adhesive layer including the adhesive binder.

Since the development of the method for manufacturing the free-standing electrode film, the method includes forming the adhesive layer on the current collector that is easy to handle due to higher mechanical strength than the electrode film, and attaching the electrode film.

However, when attaching the electrode film after forming the adhesive layer on the current collector, it is necessary to adjust the position to solve a mismatch problem between the position at which the adhesive layer is formed on the current collector and the position at which the electrode active material layer is attached in the electrode manufacturing process, and the inventors first recognized that even a very small difference between the transfer speed of the current collector and the attachment speed of the electrode active material layer during the process increases the defect ratio over the entire process.

In addition, the inventors further recognized that the position mismatch between the current collector and the electrode film reduces the adhesion strength between the current collector and the electrode film, and when the electrode film and the adhesive layer are in direct contact with each other across the entire surface between the electrode film and the current collector, the interfacial resistance between the electrode film and the current collector increases, and there is a need to solve the problem.

To solve the problem, according to an aspect of the present disclosure, there is provided a method for manufacturing an electrode including forming the adhesive layer directly on the electrode film and attaching the current collector to the adhesive layer.

Accordingly, an aspect of the present disclosure provides the preliminary electrode including the electrode film and the adhesive layer on one surface of the electrode film.

In this instance, the adhesive layer includes an adhesive layer region where the adhesive binder is clustered and an adhesive layer-absent region where one surface of the electrode film is exposed to the outside. That is, the preliminary electrode includes the adhesive layer in which the adhesive binder is locally present on the surface of the electrode film.

As described below, according to an embodiment of the present disclosure, at least part of the adhesive layer may be formed by applying a solution containing the adhesive binder to at least one surface of the electrode film by a spray coating process. By the spray coating process, according to the viscosity of the solution containing the adhesive binder and/or the distance between one surface of the electrode film and a spray nozzle of a sprayer, the adhesive binder may be scattered or distributed over the surface of the electrode film. In this instance, due to the viscosity of the adhesive binder, the region in which the adhesive binder is distributed may be where the adhesive binder agglomerates to form a cluster, and the region where the solution containing the adhesive binder is not applied by the spraying process may be where the surface of the electrode film is exposed to the outside.

Referring to this mechanism, the adhesive layer on the electrode film may include the 'adhesive layer region' where the adhesive binder is clustered and the 'adhesive layer-absent region' where the adhesive binder is not applied and the surface of the electrode film is exposed to the outside, but the mechanism of the present disclosure is not limited thereto.

According to an aspect of the present disclosure, with the adhesive layer including the adhesive layer region and the adhesive layer-absent region on the electrode film, it may be possible to improve the adhesion strength between the current collector and the electrode film by the adhesive layer region, and to reduce the interfacial resistance between the current collector and the electrode film through the area of direct contact between the current collector and the electrode film by the adhesive layer-absent region.

In addition, because the surface of the current collector is generally made of a metallic material and has a relatively smooth surface, when the adhesive layer is directly formed on one surface of the current collector, there is a clear interface between the current collector and the adhesive layer. However, according to an embodiment of the present disclosure, the electrode film is generally formed such that the particulate electrode active material is held together by the electrode binder, and thus the electrode film has a structure in which at least one pore, preferably a plurality of pores is formed in the surface. Therefore, when the adhesive layer is directly formed on the surface of the electrode film, at least part of the solution containing the adhesive binder for forming the adhesive layer is filled in the pores, and accordingly, even though the adhesive binder used is the same type and amount, the adhesion strength between the current collector and the electrode film may be improved compared to the adhesive layer formed on the current collector. In addition, the adhesive binder filled in the pores of the surface of the electrode film may reduce the resistance at the interface between the adhesive layer and the electrode film, thereby reducing the interfacial resistance between the current collector and the electrode film compared to the adhesive layer formed on the current collector even though the adhesive binder used is the same type and amount.

As described above, according to an embodiment of the present disclosure, the electrode film may have a structure in which the surface includes at least one pores recessed in the inward direction of the electrode film, and the adhesive binder is included in the at least one pore.

Specifically, the electrode film may include the plurality of pores uniformly formed on the surface.

In an embodiment of the present disclosure, the pore included in the surface of the electrode film may be classified into micropore or macropore according to the size. The micropore may be, for example, from 1 $\mu$m to 10 $\mu$m in diameter, and the macropore may be formed by agglomeration of two or more micropores and the diameter may range from 1 $\mu$m to 500 $\mu$m, but the present disclosure is not limited thereto. The pore size may be, for example, measured by an analysis method including carrying out measurement after obtaining an image using an optical microscope, for example, scanning electron microscopy (SEM), or mercury porosimetry. For example, the mercury porosimetry may carry out measurement using PM33GT from Quantachrome. In addition, when measuring the pore size, if necessary, the dimension of the electrode film may be, for example, measured according to the method of KSM 3042, and the thickness of the electrode film may be measured using a known micrometer thickness gauge, but the measurement method is not limited thereto.

According to an embodiment of the present disclosure, because the adhesive layer includes the adhesive layer region and the adhesive layer-absent region, the adhesive layer includes an area where the surface of the electrode film is covered by the adhesive binder and an area where the surface of the electrode film is exposed to the outside.

In this instance, in the specification, a ratio of the area of the surface of the electrode film exposed to the outside to the area of the surface of the electrode film covered by the adhesive binder may be referred to as 'open ratio'.

In an embodiment of the present disclosure, the 'open ratio' may be expressed by the following equation 1.

[Equation 1]

$$\text{Open ratio (\%)} = A_O/A_C \times 100$$

In the above Equation 1,

$A_O$ denotes the area of the adhesive layer-absent region, and
$A_C$ denotes the area of the adhesive layer region.

In an embodiment of the present disclosure, each of the area $A_O$ of the adhesive layer-absent region and the area $A_C$ of the adhesive layer region may be measured using an image analysis tool. Specifically, a photographic image taken using the image analysis tool may be divided into the adhesive layer region and the adhesive layer-absent region by a difference in brightness, and the open ratio may be measured by summing up the area of each of the adhesive layer region and the adhesive layer-absent region according to color.

In an embodiment of the present disclosure, the open ratio of the adhesive layer according to the above Equation 1 may be 25% or less. For example, the open ratio may range from 1% to 25%, from 5% to 25%, from 10% to 20%, from 10% to 15%, from 13% to 15%, from 13% to 14%, or from 14% to 15%. When the open ratio lies in the above-described range, this may have a beneficial effect on low interfacial resistance between the current collector and the electrode film and a predetermined level or more of electrode adhesion strength, but the present disclosure is not limited thereto.

In an embodiment of the present disclosure, the adhesive layer having the aforementioned open ratio may be formed by the following process in the method for manufacturing the electrode, but the present disclosure is not limited thereto.

In an embodiment of the present disclosure, the adhesive layer includes the adhesive binder to provide adhesive strength. The adhesive binder is not limited to a particular type and may include any polymer used in the adhesive layer, a cohesive layer, or a layer having a similar purpose in the process of manufacturing the electrode, and the present disclosure is not limited thereto.

In an embodiment of the present disclosure, the adhesive binder may include, for example, styrene butadiene rubber (SBR), butadiene rubber (BR), nitrile butadiene rubber (NBR), styrene butadiene styrene block polymer (SBS), styrene ethylene butadiene block polymer (SEB), styrene-(styrene butadiene)-styrene block polymer, natural rubber (NR), isoprene rubber (IR), ethylene-propylene-diene terpolymer (EPDM), poly(ethylene-co-propylene-co-5-methylene-2-norbornene), polytetrafluoroethylene (PTFE), polyvinylidene fluoride, polyvinyl chloride, polyvinylidene fluoride-co-hexafluoropropylene, polyvinylidene fluoride-co-trichloroethylene, polymethylmethacrylate, polyethylhexylacrylate, polybutylacrylate, polyacrylonitrile, polyvinylpyrrolidone, polyvinylacetate, polyethylene, polypropylene, polyethylene-co-vinyl acetate, polyethylene oxide, polypropylene oxide, polyarylate, cyanoethylpullulan, cyanoethylpolyvinylalcohol or two or more of them. Specifically, the adhesive binder may include, but is not limited to, styrene butadiene rubber (SBR), nitrile butadiene rubber (NBR), polymethylmethacrylate, polyethylhexylacrylate, polybutylacrylate, or two or more of them.

In an embodiment of the present disclosure, the adhesive binder may be appropriately selected depending on the method for forming the adhesive layer and/or the type of the electrode active material.

For example, when an aqueous solvent is used to prepare the solution containing the adhesive binder for forming the adhesive layer, and/or when the electrode active material included in the electrode film is an active material having strong resistance to water, the adhesive binder may include an aqueous binder.

In the specification, 'the electrode active material is moisture resistant' represents that the electrode active material has no or little property of being modified, oxidized, or decomposed in the presence of water compared to other electrode active materials.

In an embodiment of the present disclosure, when the electrode active material includes a lithium-iron-phosphate-based compound, the adhesive binder may include the aqueous binder, but the present disclosure is not limited thereto.

In an embodiment of the present disclosure, the aqueous binder may include, for example, polyvinylidene fluoride (PVDF).

In an embodiment of the present disclosure, the adhesive layer may further include a conductive material to impart conductivity to reduce the interfacial resistance between the current collector and the electrode film. The conductive material is not limited to a particular one and may include any material having conductive properties while not causing any chemical change to the corresponding battery, and for example, may include graphite such as natural graphite or artificial graphite; carbon black-based carbon compounds such as carbon black, acetylene black, Ketjen black, channel black, furnace black, lamp black, or thermal black; conductive fibers such as carbon fibers or metal fibers; fluorocarbon; metal powders such as aluminum powder or nickel powder; conductive whiskey such as zinc oxide or potassium titanate; conductive metal oxide such as titanium oxide; conductive materials such as polyphenylene derivatives. Specifically, for uniform mixing of the conductive material and improvement of conductivity, the conductive material may include activated carbon, graphite, carbon black, carbon nanotubes, or a mixture thereof, and more specifically, activated carbon.

In an embodiment of the present disclosure, the thickness of the adhesive layer may range, for example, from 300 nm to 1.5 $\mu$m, and specifically, from 700 nm to 1.3 $\mu$m, but is not limited thereto. The thickness of the adhesive layer may represent a measured value by a known thickness measurement method. The thickness measurement method is not limited thereto, but the thickness of the adhesive layer may be, for example, a measured value using a thickness gauge (Mitutoyo, VL-50S-B).

According to an embodiment of the present disclosure, the preliminary electrode includes the free-standing electrode film formed with no drying process without using a solvent as the electrode active material layer. Specifically, the preliminary electrode includes the free-standing film including the electrode active material and the fibrillated electrode binder, wherein the electrode active material is held together by the fibrillated electrode binder.

In an embodiment of the present disclosure, the free-standing electrode film may be formed by compression of electrode powder mixture as described below. For example, the free-standing electrode film may have a shape in which the electrode powder mixture is compacted by compression to form a layered structure. The electrode powder mixture may be the powdery electrode material including the electrode active material and the electrode binder, and may be obtained, for example, by breaking the mixture lump including the electrode active material and the electrode binder as described below.

In an embodiment of the present disclosure, the electrode active material may be a positive electrode active material. The positive electrode active material may include, for example, lithium transition metal oxide; lithium metal iron phosphate; lithium nickel-manganese-cobalt oxide; oxide with partial substitution by other transition metals in lithium nickel-manganese-cobalt oxide; or two or more of them, but is not limited thereto. Specifically, the positive electrode active material may include, for example, layered compounds such as lithium cobalt oxide ($LiCoO_2$), lithium nickel oxide ($LiNiO_2$), or compounds with substitution by one or more transition metals; lithium manganese oxide of formula $Li_{1+x}Mn_{2-x}O_4$ (x is 0 to 0.33), such as $LiMnO_3$, $LiMn_2O_3$, and $LiMnO_2$; lithium copper oxide ($Li_2CuO_2$); vanadium oxide such as $LiV_3O_8$, $LiV_3O_4$, $V_2O_5$ and $Cu_2V_2O_7$; Ni-site type lithium nickel oxide represented by formula $LiNi_{1-x}M_xO_2$ (M = Co, Mn, Al, Cu, Fe, Mg, B or Ga, and x = 0.01 to 0.3); lithium manganese composite oxide represented by formula $LiMn_{2-x}M_xO_2$ (wherein, M = Co, Ni, Fe, Cr, Zn or Ta, and x = 0.01 to 0.1) or $Li_2Mn_3MO_8$ (M = Fe, Co, Ni, Cu or Zn); lithium metal phosphate $LiMPO_4$ (M is M = Fe, Co, Ni or Mn); lithium nickel-manganese-cobalt oxide $Li_{1+x}(Ni_aCo_bMn_c)_{1-x}O_2$ (x = 0 to 0.03, a = 0.3 to 0.95, b = 0.01 to 0.35, c = 0.01 to 0.5, a+b+c=1); lithium nickel-manganese-cobalt oxide with partially substitution by aluminum $Li_a[Ni_bCo_cMn_dAl_e]_{1-f}M1_fO_2$ (M1 is at least one selected from the group consisting of Zr, B, W, Mg, Ce, Hf, Ta, La, Ti, Sr, Ba, F, P and S, and $0.8 \leq a \leq 1.2$, $0.5 \leq b \leq 0.99$, $0 < c < 0.5$, $0 < d < 0.5$, $0.01 \leq e \leq 0.1$, $0 \leq f \leq 0.1$); oxide with partial substitution by other transition metals in lithium nickel-manganese-cobalt oxide $Li_{1+x}(Ni_aCo_bMn_cM_d)_{1-x}O_2$ (x = 0 to 0.03, a = 0.3 to 0.95, b = 0.01 to 0.35, c = 0.01 to 0.5, d = 0.001 to 0.03, a+b+c+d=1, M is any one selected from the group consisting of Fe, V, Cr, Ti, W, Ta, Mg and Mo), disulfide compounds; $Fe_2(MoO_4)_3$, but are not limited thereto.

In an embodiment of the present disclosure, the electrode active material may be a negative electrode active material. The negative electrode active material may include, for example, carbon such as non-graphitizing carbon and graphite-based carbon; metal composite oxide such as $Li_xFe_2O_3$ ($0 \leq x \leq 1$), $Li_xWO_2$ ($0 \leq x \leq 1$), $Sn_xMe_{1-x}Me'_yO_z$ (Me: Mn, Fe, Pb, Ge; Me': Al, B, P, Si, Group 1, 2 and 3 elements in the periodic table, halogen; $0 < x \leq 1$; $1 \leq y \leq 3$; $1 \leq z \leq 8$); lithium metal; lithium alloy; silicon-based alloy; tin-based alloy; silicon oxide such as SiO, SiO/C, and $SiO_2$; metal oxide such as SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, and $Bi_2O_5$; conductive polymer such as polyacetylene; Li-Co-Ni based materials, but is not limited thereto.

In an embodiment of the present disclosure, the electrode binder may include, without limitation, any binder that may be fibrillated for use in the preparation of the free-standing electrode film.

The electrode binder may include, for example, polytetrafluoroethylene (PTFE)-based binder, but the present disclosure is not limited thereto.

In an embodiment of the present disclosure, the PTFE-based binder may refer collectively to binders including at least one tetrafluoroethylene unit as a repeating unit of the polymer.

In an embodiment of the present disclosure, the PTFE-based binder may include PTFE.

In an embodiment of the present disclosure, the electrode binder may include PTFE singly, or in combination with other type of electrode binder than PTFE without hindering the purpose of the present disclosure, and the present disclosure is not limited thereto.

According to an embodiment of the present disclosure, the thickness of the electrode active material layer may be, for example, in a range between 30 μm and 300 μm, but is not limited thereto.

According to an embodiment of the present disclosure, the electrode active material layer may be a single layer including a unit active material layer.

According to another embodiment of the present disclosure, the electrode active material layer may include a stack of two or more unit active material layers. In this instance, the electrode active material and the electrode binder included in each unit active material layer, and if necessary, the electrode conductive material may be the same or different for each layer, but is not limited thereto.

In an embodiment of the present disclosure, when the electrode active material layer includes the stack of two or more unit active material layers, the total thickness of the electrode active material layer may range, for example, from 30 μm to 300 μm, from 50 μm to 250 μm, from 100 μm to 200 μm, from 110 μm to 150 μm, from 110 μm to 125 μm, from 110 μm to 120 μm, or from 110 μm to 115 μm, but the present disclosure is not limited thereto.

According to another aspect of the present disclosure, there is provided an electrode including the current collector attached in contact with the adhesive layer of the preliminary electrode.

The electrode according to another aspect of the present disclosure includes the current collector, the free-standing electrode film on at least one surface of the current collector, the free-standing electrode film including the electrode active material and the fibrillated electrode binder, wherein the electrode active material is held together by the fibrillated electrode binder, and the adhesive layer including the adhesive binder between the current collector and the electrode film.

The electrode is characterized in that the interfacial resistance between the current collector and the electrode film exhibits 0.1 $\Omega \cdot cm^2$ or less, by using the preliminary electrode.

In an embodiment of the present disclosure, the interfacial resistance between the current collector and the electrode film may be, for example, 0.10 $\Omega \cdot cm^2$ or less.

In an embodiment of the present disclosure, the interfacial resistance between the current collector and the electrode film may range, for example, from 0.01 $\Omega\,cm^2$ to 0.1 $\Omega\,cm^2$, from 0.010 $\Omega\,cm^2$ to 0.10 $\Omega\,cm^2$, from 0.05 $\Omega\,cm^2$ to 0.10 $\Omega\,cm^2$, from 0.050 $\Omega\,cm^2$ to 0.09 $\Omega\,cm^2$, from 0.05 $\Omega\,cm^2$ to 0.08 $\Omega\,cm^2$, or from 0.06 $\Omega\,cm^2$ to 0.08 $\Omega\,cm^2$.

In an embodiment of the present disclosure, the interfacial resistance between the current collector and the electrode film may be 0.070 $\Omega \cdot cm^2$ to 0.075 $\Omega \cdot cm^2$.

In the specification, the interfacial resistance between the current collector and the electrode film may be measured using a commercially available electrode resistance measurement system. The electrode resistance measurement system may include, for example, a multi-probe type MP resistor such as HIOKI's RM2610, but the measurement method is not limited thereto.

In an embodiment of the present disclosure, the electrode having the above-described shape may have, for example, adhesion strength between the current collector and the electrode film of 15 gf/cm² or more.

In an embodiment of the present disclosure, the adhesion strength between the current collector and the electrode film may range, for example, from 15 gf/cm² to 50 gf/cm² , from 20 gf/cm² to 50 gf/cm², from 25 gf/cm² to 50 gf/cm², from 25 gf/cm² to 45 gf/cm², from 25 gf/cm² to 40 gf/cm², from 25 gf/cm² to 35 gf/cm², from 20 gf/cm² to 30 gf/cm², or from 25 gf/cm² to 30 gf/cm².

In the specification, the electrode adhesion strength of the electrode active material layer may be measured by a known method for measuring electrode adhesion strength, for example, a 90° peel test using a known UTM device (LLOYD Instrument LF plus), but the measurement method is not limited thereto.

In an embodiment of the present disclosure, the current collector is not limited to a particular one and may include those having high conductivity without causing any chemical change to the corresponding battery. For example, the current collector may include stainless steel, aluminum, nickel, titanium, sintered carbon, copper or aluminum or stainless steel treated with carbon, nickel, titanium or silver on the surface. The current collector may have the microtextured surface to increase the adhesion strength of the active material, and may come in different forms such as film, sheet, foil, net, porous body, foam, or non-woven fabric.

In an embodiment of the present disclosure, the thickness of the current collector may range from 10 μm to 25 μm, but is not particularly limited thereto. The thickness of the current collector may range, for example, from 10 μm to 20 μm.

According to another aspect of the present disclosure, there is provided a method for manufacturing the electrode.

The method for manufacturing the electrode according to another aspect of the present disclosure includes the step of forming the adhesive layer on at least part of at least one surface of the free-standing electrode film including the electrode active material and the fibrillated electrode binder, wherein the electrode active material is held together by the fibrillated electrode binder.

In this instance, the adhesive layer includes the adhesive layer region where the adhesive binder is clustered and the adhesive layer-absent region where one surface of the electrode film is exposed to the outside.

In an embodiment of the present disclosure, the adhesive layer may be formed such that the open ratio of the adhesive layer according to the following Equation 1 is 25% or less.

[Equation 1]

$$\text{Open ratio (\%)} = A_O/A_C \times 100$$

In the above Equation 1,

$A_O$ denotes the area of the adhesive layer-absent region, and
$A_C$ denotes the area of the adhesive layer region.

In the specification, in the descriptions of the method for manufacturing the electrode, for the description of the components of the electrode, reference is made to the foregoing description of the electrode.

In an embodiment of the present disclosure, before the step of forming the adhesive layer, the method may further include the step of manufacturing the free-standing electrode film.

The step of manufacturing the free-standing electrode film does not use a solvent, thereby eliminating the need for a drying process, and may be performed by a known method for forming the free-standing electrode film, and its detailed description is omitted.

According to an aspect of the present disclosure, to form the adhesive layer including the adhesive layer region and the adhesive layer-absent region, a method for forming the adhesive layer on a part of at least one surface of the electrode film may be necessary.

In particular, a method for forming the adhesive layer with the aforementioned open ratio may be necessary. When the adhesive layer is formed with the aforementioned open ratio, this may have a beneficial effect in terms of not only the adhesion strength and interfacial resistance between the current collector and the electrode film of the manufactured electrode, but also the drying process for forming the adhesive layer.

In an embodiment of the present disclosure, to form the adhesive layer with the desired open ratio, it is preferable that a composition for forming the adhesive layer applied to at least one surface of the electrode film is dried within the desired area to form the adhesive layer region in the applied shaped.

To this end, in an embodiment of the present disclosure, the step of forming the adhesive layer may use the composition for forming the adhesive layer having a limited viscosity. When the viscosity of the composition for forming the adhesive layer is limited, it may be advantageous to apply the composition for forming the adhesive layer to the desired area and dry it.

For example, the adhesive layer may be formed using the composition for forming the adhesive layer including the adhesive binder. In this instance, in an embodiment of the present disclosure, the viscosity of the composition for forming the adhesive layer may be 500 cP or less at 25°C.

In an embodiment of the present disclosure, the electrode may have an end portion of the adhesive layer in a straight shape. In this instance, when the viscosity of the composition for forming the adhesive layer is too high, the adhesive layer may be formed with uneven thickness at an end portion, failing to form the straight shape of the end portion of the adhesive layer when the composition agglomerated in at least part of the end portion are pressed. Accordingly, it may be preferable that the viscosity of the composition for forming the adhesive layer is limited to 500 cP or less, but since the above-described method for manufacturing the electrode is not limited thereto, the viscosity of the composition for forming the adhesive layer is not limited thereto.

In an embodiment of the present disclosure, for the adhesive binder included in the composition for forming the adhesive layer, reference is made to the foregoing description.

In an embodiment of the present disclosure, the viscosity of the composition for forming the adhesive layer may be, for example, 500 cP or less or 400 cP or less at 25°C, and specifically from 10 cP to 500 cP, from 50 cP to 500 cP, from 100 cP to 500 cP, from 100 cP to 400 cP or from 10 cP to 100 cP. When the viscosity of the composition for forming the adhesive layer lies in the aforementioned range, it may be possible to solve the problem that the composition for forming the adhesive layer flows down in the area where it is applied, resulting in lower open ratio, or the composition for forming the adhesive layer gets dry with uneven thickness, resulting in electrode performance degradation, but the present disclosure is not limited thereto.

In an embodiment of the present disclosure, the viscosity of the composition for forming the adhesive layer may be measured by a known method for measuring the viscosity of the composition including the adhesive binder, and the measurement method is not limited to a particular one. For example, the viscosity of the composition for forming the adhesive layer may be measured using Brookfield viscometer LV model, spindle #16 at room temperature of 25°C. Specifically, the measurement may be done in the conditions of the viscometer, the sample container 8RP and the shear rate of 3.5, but is not limited thereto.

In an embodiment of the present disclosure, to make one surface of the electrode film having the adhesive layer have the aforementioned open ratio, the step of forming the adhesive layer may include the step of forming the adhesive layer region in a pattern.

The commonly used method for forming the adhesive layer using the composition for forming the adhesive layer is a method in which a device for applying the composition for forming the adhesive layer is in direct contact with one surface of a target (i.e., the electrode film in the present disclosure), such as gravure coating or screen printing. In the specification, this process may be referred to as a 'contact coating process'. In contrast, in this case, when one surface of the electrode film or a substrate where the adhesive layer will be formed is not even, the formed adhesive layer is not even, failing to form the straight shape of the adhesive layer region at one end portion, resulting in higher interfacial resistance between the current collector and the electrode film, or the open ratio of the adhesive layer outside of the desired level.

Accordingly, according to an embodiment of the present disclosure, the step of forming the adhesive layer may be performed by a non-contact coating process. The non-contact coating process refers to a coating method by a process in which the device for applying the composition for forming the adhesive layer is not in direct contact with one surface of the target (i.e., the electrode film in the present disclosure). For example, the non-contact coating process may include nozzle coating or spray coating.

In the specification, the coating method by the 'nozzle coating' refers to a coating method by equipment equipped with a peak pulse head. For example, it is a piezo coating method that controls the jet of a coating composition by an electric signal, and is performed by the equipment equipped with a valve-type head.

In the specification, the coating method by the 'spray coating' refers to a coating method by equipment equipped with a spray head. For example, it is a pneumatic coating method that controls the jet of a coating composition by air pressure and is performed by the equipment equipped with a spray-type head.

In an embodiment of the present disclosure, the spray coating process may apply the composition for forming the adhesive layer in a constant, optimum amount irrespective of whether the surface of the electrode film is even or not, thereby forming the adhesive layer with uniform thickness.

In an embodiment of the present disclosure, after forming the adhesive layer on at least one surface of the electrode film as described above, the method may further include the step of attaching the current collector to the surface of the electrode film having the adhesive layer such that the current collector contacts the adhesive layer.

In an embodiment of the present disclosure, when the adhesive layer and the current collector are formed on the electrode film in a sequential order, the method may further include the steps of drying and applying pressure if necessary.

In an embodiment of the present disclosure, the step of applying pressure may be performed by a commonly used method for laminating the current collector and the electrode active material layer in the manufacture of the corresponding battery, and is not limited to a particular method. For example, the lamination may be performed by a lamination roll, and in this instance, the lamination roll may be maintained in a temperature range between room temperature (25°C) and 200°C, but is not limited thereto.

According to the above-described method, the electrode may be manufactured by a new method without using a solvent. In particular, in the dry electrode manufacturing method, the use of the adhesive layer may effectively solve the problem with the reduction in interfacial resistance or electrode adhesion strength.

According to another aspect of the present disclosure, there is provided an electrode manufactured by the above-described method.

According to another aspect of the present disclosure, there is provided an electrochemical device including a positive electrode, a negative electrode, and a separation layer interposed between the positive electrode and the negative electrode, wherein at least one of the positive electrode and the negative electrode is the above-described electrode.

In an embodiment of the present disclosure, the separation layer may be a separation membrane or a solid electrolyte membrane.

The electrochemical device includes any device in which electrochemical reaction takes place, and specific examples include any type of primary and secondary batteries, fuel cells, solar cells, or capacitors such as supercapacitor devices. In particular, among secondary batteries, lithium secondary batteries including lithium metal secondary batteries, lithium ion secondary batteries, lithium polymer secondary batteries, or lithium ion polymer secondary batteries are preferable.

The detailed structure of the electrochemical device is well known, and its description is omitted.

The electrochemical device according to the present disclosure may be included as a unit cell in an energy storage system, but the use of the present disclosure is not limited thereto.

The detailed structure of the energy storage system is well known, and its description is omitted.

Hereinafter, the present disclosure will be described in detail with reference to examples. However, the following examples are provided to describe an embodiment of the present disclosure, and the present disclosure is not limited to the following examples.

**Experimental example. Evaluation of interfacial resistance and electrode adhesion strength as a function of the open ratio of the adhesive layer.**

First, an aqueous composition for forming an adhesive layer with solids content of 20% was prepared. In this instance, the solids included conductive material (Li-250, Denka Black): adhesive binder (PVDF) at a controlled weight ratio of 1:2. In this instance, the viscosity of the prepared composition for forming the adhesive layer was 10 cP at 25°C (Brookfield viscometer LV model, spindle #16 / sample container 8 RP, shear rate 3.5).

Subsequently, an active material ($LiFePO_4$), a conductive material (carbon black) and a binder (PTFE) were mixed at a weight ratio of 94.5:1.5:4.5, and a mixture lump was obtained in which the active material and the conductive material were held together by the fibrillated binder through kneading of the binder. The obtained mixture lump was milled to obtain a powder, and the obtained powder was calendared twice to obtain a free-standing electrode film having a thickness of 115 $\mu$m.

The prepared composition for forming the adhesive layer was coated on one surface of the as-prepared free-standing electrode film by spray coating and dried to form an adhesive layer with an open ratio of 14% (Example 1), 26% (Comparative Example 1) or 36% (Comparative Example 2), respectively.

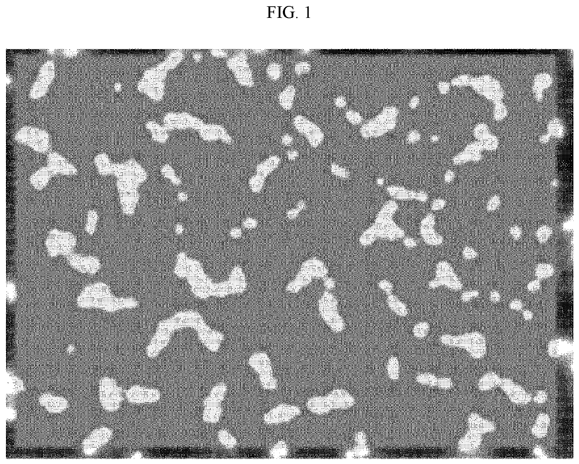

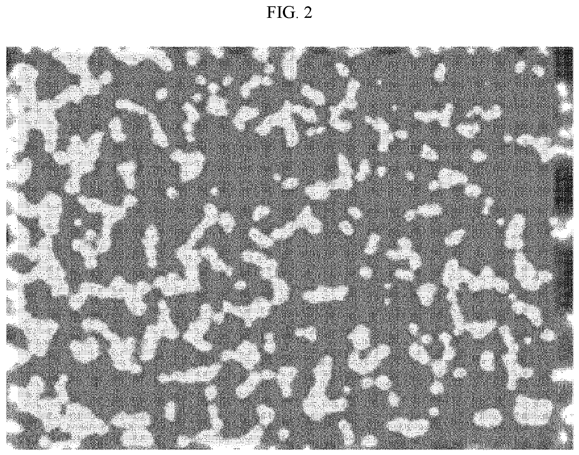

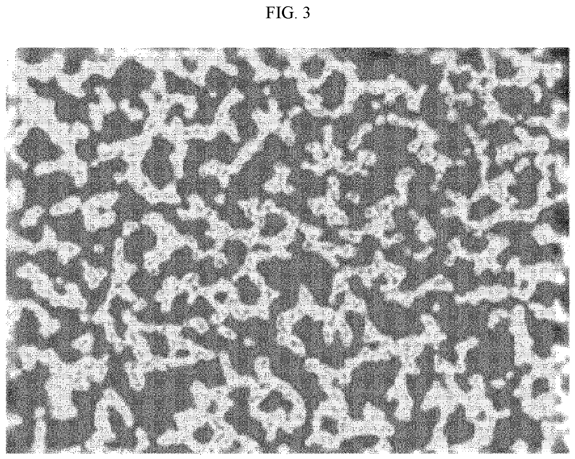

To calculate the open ratio, an image analysis tool was used. An image was divided into an adhesive layer region and an adhesive layer-absent region by a difference in brightness, the area of the adhesive layer region and the area of the adhesive layer-absent region were measured, and the open ratio was calculated by the Equation: open ratio = [the area of the adhesive layer-absent region/the area of the adhesive layer region X 100 (%)]. FIGS. 1 to 3 show images (50x magnification) processed by the image analysis tool on the upper surfaces of the electrode films having the adhesive layers according to Example 1, Comparative Example 1, and Comparative Example 2, respectively. In FIGS. 1 to 3, the bright area indicates the adhesive layer region, and the dark area indicates the adhesive layer-absent region.

Subsequently, the electrode film (preliminary electrode) having the adhesive layer was attached such that the adhesive layer and the current collector (Al foil, 15 $\mu$m) were in contact with each other, and rolled at room temperature in the condition of a gap of 60 $\mu$m between rolling rolls to obtain an electrode including current collector/adhesive layer/electrode film stacked in that order.

For each of the as-prepared samples of Example 1, Comparative Example 1, and Comparative Example 2, interfacial resistance and electrode adhesion strength were measured using the following methods, and the results are shown in TABLE 1 below.

TABLE 1 below shows the evaluation results of an electrode prepared by attaching the free-standing electrode film to a product having an adhesive layer on an aluminum current collector (PCAF, LG Chem 0.5 $\mu$m SW4 primer gravure coated on Dongwon 15 $\mu$m Al foil (A1100)) as Comparative Example 3 by the same method.

[Method for measuring interfacial resistance]

The as-prepared electrode sample was cut into a size of 50 X 50 mm$^2$ and placed on a measurement unit of an MP resistance meter (HIOKI RM2610). In this instance, care is taken to maintain the Multi Probe within the sample electrode. The thickness of the electrode, the thickness of the current collector, and the coating thickness of the adhesive layer were entered during the measurement. The measurement results are shown in TABLE 1 below.

[Method of measuring electrode adhesion strength]

The electrode sample was cut into a size of 20 X 100 mm$^2$, a slide glass was mounted on UTM equipment (LLOYD Instrument FL Plus), the tailored electrode sample was attached to the mounted slide glass and the slide glass having the adhered electrode sample was tightly held on a peel test jig. The end of the sample was fixed to a load cell and an adhesion force was measured while lifting at an angle of 90°.

The measurement distance was set to 80 mm, and adhesion strength values at each distance of 40 mm and 80 mm were measured. A total of 6 measurement points for each of three sample were collected to obtain data.

[TABLE 1]

| | Open ratio (%) | Positive electrode loading (mg/25 cm$^2$) | Porosity of positive electrode (%) | Interfacial resistance ($\Omega$ cm$^2$) | Electrode adhesion strength (gf/cm$^2$) |
|---|---|---|---|---|---|
| Comparative Example 1 | 26 | - | - | - | - |
| Comparative Example 2 | 36 | - | - | - | - |

(continued)

|  | Open ratio (%) | Positive electrode loading (mg/25 cm$^2$) | Porosity of positive electrode (%) | Interfacial resistance ($\Omega$ cm$^2$) | Electrode adhesion strength (gf/cm$^2$) |
|---|---|---|---|---|---|
| Comparative Example 3 | 0 | 7,450 | 29.4 | 0.101 | 26.3 |
| Example 1 | 14 | 7,450 | 29.4 | 0.073 | 15.9 |

As a result of the evaluation, it was confirmed that the preliminary electrodes according to Comparative Examples 1 and 2 exhibited the failed adhesion to the current collector due to adhesion strength loss of the adhesive binder because the solution for forming the adhesive layer was dried immediately when forming the adhesive layer. Through this, it was confirmed that the open ratio of 25% or less is preferable when forming the adhesive layer on the electrode film.

In particular, when the adhesive layer is directly formed on the electrode film according to the present disclosure, it was confirmed that it was more preferable in terms of interfacial resistance and electrode adhesion strength compared to the commercial product having the adhesive layer on the current collector (Comparative Example 3).

**Claims**

1. A preliminary electrode comprising:

   a free-standing electrode film including an electrode active material and a fibrillated electrode binder, wherein the electrode active material is held together by the fibrillated electrode binder; and
   an adhesive layer present on at least part of at least one surface of the electrode film, the adhesive layer including an adhesive binder,
   wherein the adhesive layer includes an adhesive layer region where the adhesive binder is clustered and an adhesive layer-absent region where one surface of the electrode film is exposed to an outside.

2. The preliminary electrode according to claim 1,
   wherein an open ratio of the adhesive layer according to the following Equation 1 is 25% or less:

$$[\text{Equation 1}]$$

$$\text{Open ratio (\%)} = A_O / A_C \times 100$$

   wherein in the Equation 1,

   $A_O$ denotes an area of the adhesive layer-absent region, and
   $A_C$ denotes an area of the adhesive layer region.

3. The preliminary electrode according to claim 2,
   wherein the open ratio is in a range between 5% and 25%.

4. The preliminary electrode according to claim 2,
   wherein the open ratio is in a range between 10% and 15%.

5. The preliminary electrode according to claim 1,

   wherein the surface of the electrode film includes at least one pore recessed in an inward direction of the electrode film, and
   wherein the adhesive binder is included in the at least one pore.

6. An electrode comprising:

   a current collector;

a free-standing electrode film present on at least one surface of the current collector, the free-standing electrode film including an electrode active material and a fibrillated electrode binder, wherein the electrode active material is held together by the fibrillated electrode binder; and

an adhesive layer including an adhesive binder between the current collector and the electrode film, wherein an interfacial resistance between the current collector and the electrode film is 0.1 $\Omega \cdot cm^2$ or less.

7. The electrode according to claim 6,
   wherein an adhesion strength between the current collector and the electrode film is 15 gf/cm$^2$ or more.

8. The electrode according to claim 6,
   wherein the adhesive layer includes an adhesive layer region where the adhesive binder is clustered and an adhesive layer-absent region where one surface of the electrode film is exposed to an outside.

9. The electrode according to claim 8,
   wherein an open ratio of the adhesive layer according to the following Equation 1 is 25% or less:

$$[\text{Equation 1}]$$

$$\text{Open ratio (\%)} = A_O / A_C \times 100$$

wherein in the Equation 1,

$A_O$ denotes an area of the adhesive layer-absent region, and
$A_C$ denotes an area of the adhesive layer region.

10. A method for manufacturing an electrode, the method comprising the step of:

    forming an adhesive layer on at least part of at least one surface of a free-standing electrode film including an electrode active material and a fibrillated electrode binder, wherein the electrode active material is held together by the fibrillated electrode binder,
    wherein the adhesive layer includes an adhesive layer region where the adhesive binder is clustered and an adhesive layer-absent region where one surface of the electrode film is exposed to an outside.

11. The method for manufacturing the electrode according to claim 10,
    wherein the adhesive layer is formed with an open ratio of 25% or less, the open ratio defined by the following Equation 1:

$$[\text{Equation 1}]$$

$$\text{Open ratio (\%)} = A_O / A_C \times 100$$

wherein in the Equation 1,

$A_O$ denotes an area of the adhesive layer-absent region, and
$A_C$ denotes an area of the adhesive layer region.

12. The method for manufacturing the electrode according to claim 10, further comprising the step of:
    attaching a current collector to one surface of the electrode film having the adhesive layer such that the current collector contacts the adhesive layer.

13. The method for manufacturing the electrode according to claim 10,
    wherein the step of forming the adhesive layer is performed by a non-contact coating process.

14. The method for manufacturing the electrode according to claim 10,

    wherein the adhesive layer is formed using a composition for forming the adhesive layer including the adhesive binder, and
wherein a viscosity of the composition for forming the adhesive layer is 500 cP or less at 25°C.

15. An electrochemical device comprising:
a positive electrode; a negative electrode; and a separation layer interposed between the positive electrode and the negative electrode; wherein at least one of the positive electrode and the negative electrode is the electrode according to any one of claims 6 to 9.

FIG. 1

FIG. 2

FIG. 3

## INTERNATIONAL SEARCH REPORT

| International application No. |
|---|
| **PCT/KR2024/014772** |

| A. | CLASSIFICATION OF SUBJECT MATTER |
|---|---|

**H01M 4/04**(2006.01)i; **H01M 4/62**(2006.01)i

According to International Patent Classification (IPC) or to both national classification and IPC

| B. | FIELDS SEARCHED |
|---|---|

Minimum documentation searched (classification system followed by classification symbols)

H01M 4/04(2006.01); C01G 53/04(2006.01); H01M 10/0525(2010.01); H01M 4/02(2006.01); H01M 4/13(2010.01); H01M 4/139(2010.01); H01M 4/62(2006.01); H01M 4/66(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전기화학소자(electrochemical device), 전극(electrode), 활물질(active material), 바인더(binder), 섬유화(fibrilization), 자립형(free-standing), 접착층(adhesive layer), 접착성 바인더(adhesive binder), 군집(cluster), 비형성부(non-forming)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | WO 2023-136665 A1 (LG CHEM, LTD. et al.) 20 July 2023 (2023-07-20)<br>See claims 1, 9, 12 and 13; paragraphs [0038], [0055], [0070], [0092], [0096], [0097], [0108]-[0110], [0200]-[0203] and [0246]-[0250]; and figure 1. | 1-15 |
| Y | WO 2019-103874 A1 (MAXWELL TECHNOLOGIES, INC.) 31 May 2019 (2019-05-31)<br>See claims 1, 2 and 12; and paragraphs [0073] and [0077]. | 1-15 |
| Y | JP 11-073947 A (RICOH CO., LTD.) 16 March 1999 (1999-03-16)<br>See abstract; claims 1-5; and paragraph [0032]. | 2-4,6-9,11,15 |
| A | JP 2023-070698 A (TOYOTA MOTOR CORP. et al.) 22 May 2023 (2023-05-22)<br>See abstract; claims 1-3; paragraph [0052]; and tables 1 and 2. | 1-15 |
| A | KR 10-2017-0034923 A (TOYOTA JIDOSHA KABUSHIKI KAISHA) 29 March 2017 (2017-03-29)<br>See abstract; claims 1-3; and figure 7. | 1-15 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 January 2025** | **17 January 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2024/014772**

| Patent document cited in search report | | | Publication date (day/month/year) | Patent family member(s) | | | Publication date (day/month/year) |
|---|---|---|---|---|---|---|---|
| WO | 2023-136665 | A1 | 20 July 2023 | EP | 4447168 | A1 | 16 October 2024 |
| | | | | EP | 4447168 | A4 | 06 November 2024 |
| WO | 2019-103874 | A1 | 31 May 2019 | CN | 111436199 | A | 21 July 2020 |
| | | | | EP | 3713876 | A1 | 30 September 2020 |
| | | | | JP | 2021-504877 | A | 15 February 2021 |
| | | | | JP | 2024-056867 | A | 23 April 2024 |
| | | | | KR | 10-2020-0090744 | A | 29 July 2020 |
| | | | | US | 2019-0237748 | A1 | 01 August 2019 |
| JP | 11-073947 | A | 16 March 1999 | None | | | |
| JP | 2023-070698 | A | 22 May 2023 | CN | 116111035 | A | 12 May 2023 |
| | | | | JP | 7605088 | B2 | 24 December 2024 |
| | | | | US | 2023-0142712 | A1 | 11 May 2023 |
| KR | 10-2017-0034923 | A | 29 March 2017 | CN | 104620423 | A | 13 May 2015 |
| | | | | CN | 104620423 | B | 16 January 2018 |
| | | | | JP | 6028802 | B2 | 24 November 2016 |
| | | | | KR | 10-1932866 | B1 | 27 December 2018 |
| | | | | KR | 10-2015-0038003 | A | 08 April 2015 |
| | | | | US | 2015-0194680 | A1 | 09 July 2015 |
| | | | | US | 9673455 | B2 | 06 June 2017 |
| | | | | WO | 2014-045884 | A1 | 27 March 2014 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230130792